# FASCICULE DE BREVET EUROPEEN

(11) **EP 0 621 175 B1**
(45) Date de publication et mention de la délivrance du brevet: **18.02.1998**
(21) Numéro de dépôt: 94400858.0
(22) Date de dépôt: 20.04.1994
(51) Int. Cl.: B64F 1/305, B64F 1/28

(54) **Passarelle télescopique d'accès à un aéronef munie d'une installation d'avitaillement en carburant**
Teleskopbrücke zum Zugang zu einem Flugzeug, die mit einer Brennstoffversorgungsanlage versehen ist
Telescoping loading bridge for aircraft comprising a fuel supply installation

(30) Priorité: 22.04.1993 FR 9304754
(43) Date de publication de la demande: 26.10.1994
(73) Titulaire: Société Anonyme dite : ELF ANTAR FRANCE, 92400 Courbevoie (FR)
(72) Inventeur: Magne, Michel, F-75017 Paris (FR)
(74) Mandataire: Poulin, Gérard

(56) Documents cités:
- EP-A- 0 393 229
- WO-A-87/03025
- US-A- 3 521 316
- US-A- 3 859 481
- US-A- 4 828 033

## Description

L'invention concerne une passerelle télescopique d'accès à un aéronef, comprenant une installation d'avitaillement en carburant de cet aéronef, à partir d'un réseau de distribution de carburant sous pression.

Il existe actuellement deux méthodes principales pour assurer l'avitaillement des aéronefs dans les aéroports.

Une première méthode concerne les aéroports équipés d'un réseau de distribution de carburant sous pression comprenant au moins une prise de pression située à proximité de chacun des emplacements de stationnement des aéronefs. Elle consiste à utiliser des petits camions, appelés "oléoserveurs", qui viennent se raccorder sur les prises du réseau, pour effectuer l'avitaillement des aéronefs. Chaque oléoserveur constitue un ensemble autonome qui est amené sur l'emplacement de stationnement lorsque l'avitaillement d'un aéronef doit être effectué. L'oléoserveur est équipé d'un ou plusieurs tuyaux flexibles de raccordement, d'un système de filtration du carburant, d'un compteur, d'un certain nombre de vannes et de sécurités, ainsi que d'une plate-forme élévatrice permettant à un opérateur de venir raccorder les tuyaux flexibles sur les orifices de remplissage en carburant de l'aéronef. La mise en oeuvre de ces différents appareils est assurée par des sources d'énergie, notamment hydrauliques et pneumatiques, également embarquées sur l'oléoserveur.

Bien qu'elle soit utilisée couramment sur certains aéroports, cette méthode d'avitaillement présente des inconvénients notables.

Ainsi, pour que les sources d'énergie disponibles sur l'oléoserveur soient utilisables, il est indispensable que le moteur de celui-ci reste en fonctionnement pendant toute la durée de l'avitaillement. Cela n'est évidemment pas satisfaisant du point de vue de la sécurité.

Par ailleurs, les oléoserveurs constituent des engins coûteux dont le nombre est, par conséquent, limité sur chaque aéroport. Ces engins doivent donc se déplacer en permanence d'un point à un autre sur les aéroports, ce qui crée un risque potentiel d'accident et peut parfois conduire à retarder les vols.

En outre, la distribution du carburant au moyen de l'oléoserveur est habituellement effectuée par un opérateur unique qui commande toutes les opérations soit depuis la plate-forme élévatrice de l'oléoserveur, soit depuis une plate-forme extérieure. Cela se traduit par des temps de réponse relativement longs qui ont pour conséquence des arrêts trop tardifs de l'injection du carburant, qui se déverse alors sur le sol par les trop-plein équipant les réservoirs des aéronefs. Cela n'est évidemment satisfaisant ni financièrement, ni d'un point de vue écologique.

En outre, la commande à distance des oléoserveurs a aussi pour conséquence soit une perte de fiabilité du fait de perturbations dues à l'environnement de l'aéronef, lorsqu'il s'agit d'une télécommande, soit un risque de sectionnement lorsqu'il s'agit d'une commande par câble.

La deuxième méthode d'avitaillement utilisée actuellement, qui est aussi la plus courante, concerne tous les aéroports, et notamment ceux qui ne sont pas équipés d'un réseau de distribution de carburant sous pression. Elle consiste à utiliser des camions citernes, appelés "avitailleurs", qui comprennent une ou plusieurs capacités aptes à recevoir le carburant, ainsi qu'un équipement comparable à celui des oléoserveurs. Ces avitailleurs font en permanence des trajets aller et retour entre un site de stockage, souvent extérieur à l'aéroport, et les emplacements de stationnement des aéronefs.

Etant donné que leurs équipements sont comparables à ceux des oléoserveurs, les avitailleurs présentent les mêmes inconvénients que ces derniers. De plus, la circulation sur les aéroports de camions citernes transportant des quantités très importantes de carburant, pose un problème important pour la sécurité.

En plus de ces deux méthodes d'avitaillement existantes, on connaît du document EP-A-0 291 876 un dispositif d'avitaillement comprenant un chariot sur lequel est monté un tuyau formé de segments rigides articulés entre eux et terminés par un raccord apte à être fixé sur l'orifice de remplissage en carburant des aéronefs. L'extrémité opposée du tuyau peut se brancher sur une prise de pression d'un réseau de distribution de carburant sous pression. Le chariot peut en outre être équipé de moyens de filtrage du carburant, de moyens de comptage et d'une ou plusieurs vannes.

Par rapport aux méthodes classique d'avitaillement, l'utilisation d'un tel dispositif permet de réduire les coûts et simplifie les opérations qui doivent être effectuées pour assurer l'avitaillement d'un aéronef. Cependant, un certain nombre de problèmes demeurent et notamment le problème de sécurité qui découle de la nécessité de maintenir en fonctionnement un moteur servant à entraîner les différentes sources d'énergie, notamment hydrauliques et pneumatiques, installées sur le chariot.

L' invention a précisément pour objet une passerelle télescopique incluant une installation d'avitaillement de conception nouvelle, permettant d'assurer l'avitaillement en carburant des aéronefs en toute sécurité et pour un faible coût, par des moyens dont la mise en oeuvre peut être réalisée aisément et d'une manière particulièrement rapide.

Conformément à l'invention, ce résultat est obtenu au moyen d'une passerelle télescopique d'accès à un aéronef muni d'au moins un orifice de remplissage en carburant, comprenant une installation d'avitaillement de l'aéronef, a partir d'un réseau de distribution de carburant sous pression, comprenant au moins une prise de pression située à proximité d'un emplacement de stationnement de l'aéronef et de la passerelle, ladite passerelle étant munie de moyens d'amenée d'énergie et caractérisée par le fait que l'installation d'avitaillement comporte :
- au moins un mécanisme prolongateur, motorisé et rétractable, monté à l'extrémité de la passerelle télescopique et terminé par un raccord apte à être raccordé sur l'orifice de remplissage ;
- au moins un tuyau déformable cheminant le long de la passerelle télescopique et du mécanisme prolongateur, entre la prise de pression et le raccord ; et
- des moyens de contrôle du carburant injecté par le tuyau déformable ;
   et par le fait que cette installation est commandée à partir des moyens d'amenée d'énergie qui équipent la passerelle télescopique.

Grâce à l'utilisation des moyens d'amenée d'énergies disponibles sur les passerelles télescopiques existantes, il devient possible d'effectuer l'avitaillement des aéronefs sans qu'un moteur ait à être maintenu en fonctionnement en permanence pendant les opérations d'avitaillement. La sécurité s'en trouve fortement améliorée.

De plus, du fait que l'installation est intégrée aux passerelles télescopiques existantes, l'avitaillement des aéronefs peut être réalisé sans nécessiter aucun déplacement de véhicule au sol, ce qui contribue également à améliorer la sécurité. En outre, cette caractéristique simplifie sensiblement les opérations d'avitaillement et en raccourcit la durée.

Selon le cas, le mécanisme prolongateur peut être commandé à distance à partir d'un pupitre de commande situé dans la passerelle télescopique, ou constitué par un mécanisme robotisé, entièrement automatique.

Dans le premier cas, l'installation comporte avantageusement au moins une caméra vidéo placée à l'extrémité du mécanisme prolongateur, un moniteur vidéo situé sur le pupitre de commande et des moyens de transmission d'images entre la caméra et le moniteur.

Quel que soit le type de commande utilisé pour manoeuvrer le mécanisme prolongateur, des détecteurs de proximité sont avantageusement placés à l'extrémité de ce mécanisme, pour faciliter le raccordement du raccord placé à l'extrémité du mécanisme prolongateur sur l'orifice de remplissage en carburant de l'aéronef.

Dans une mise en oeuvre préférentielle de la passerelle selon l'invention, on utilise un badge d'identification de l'aéronef, tel qu'un badge hyperfréquence, sur lequel sont stockées des informations relatives à cet aéronef (type d'aéronef, compagnie aérienne, immatriculation, etc.). Un récepteur placé sur la passerelle télescopique reçoit alors les informations stockées sur le badge.

Dans le cas où le mécanisme prolongateur est un mécanisme robotisé, entièrement automatique, les informations stockées sur le badge incluent avantageusement les coordonnées de l'orifice de remplissage en carburant.

L'utilisation d'un badge d'identification de l'aéronef permet aussi de faciliter la facturation. A cet effet, des moyens d'acquisition de données de comptage relatives au carburant délivré peuvent être placés sur le poste de commande. A ces moyens d'acquisition de données de comptage sont associés des moyens de transmission, à un centre de traitement, des données de comptage et des informations stockées sur le badge.

Dans une forme de réalisation préférentielle de l'invention, le mécanisme prolongateur est un bras tubulaire motorisé qui forme un tronçon du tuyau flexible. Ce bras tubulaire motorisé peut comprendre plusieurs segments articulés entre eux, dont l'un au moins est avantageusement télescopique.

Le tuyau flexible comprend en outre un troncon associé à la passerelle télescopique et qui peut être selon le cas soit formé de segments articulés, soit constitué par un tuyau souple.

On décrira à présent, à titre d'exemple non limitatif, une forme de réalisation préférentielle de l'invention, en se référant aux dessins annexés, dans lesquels :
- la figure 1 est une vue de côté d'une passerelle télescopique d'accès à un aéronef, à laquelle est associée une installation d'avitaillement de cet aéronef, conformément à l'invention ;
- la figure 2 est une vue comparable à la figure 1, illustrant schématiquement l'accostage du mécanisme prolongateur de l'installation d'avitaillement sur un orifice de remplissage en carburant d'un aéronef ; et
- la figure 3 est une vue de dessus illustrant, dans une autre configuration, la possibilité d'effectuer l'avitaillement en carburant d'un aéronef alors que la passerelle télescopique occupe sa position assurant le transfert des passagers.

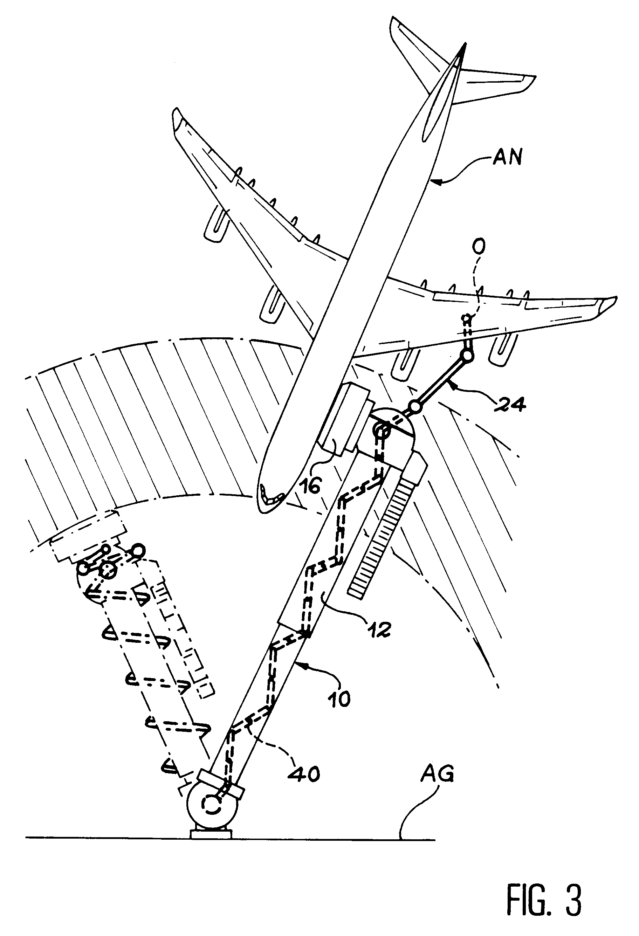

Sur les figures, la référence 10 désigne de façon générale une passerelle télescopique conçue pour permettre le transfert des passagers entre un aérogare AG et un aéronef AN (figure 3) occupant un emplacement de stationnement situé à proximité de cet aérogare. Il est important d'observer que la passerelle télescopique 10 est en elle-même un appareil bien connu qui peut prendre de nombreuses configurations différentes sans sortir du cadre de l'invention.

Pour la bonne compréhension de l'invention, on rappellera simplement ici qu'une passerelle télescopique 10 d'accès aux aéronefs forme un couloir dont une extrémité fixe débouche directement dans une salle de l'aérogare AG. L'extrémité opposée de la passerelle 10 est apte à se déplacer entre une position inactive, relativement proche de l'aérogare, et une position active dans laquelle cette extrémité affleure l'aéronef AN, en face de l'une de ses portes d'accès. A cet effet, les passerelles télescopiques 10 comportent généralement au moins un tronçon central télescopique 12 de longueur variable, dont l'extrémité la plus proche de l'aérogare AG repose sur un pilier 14, de façon à pouvoir pivoter autour de l'axe vertical de ce pilier. Un tronçon fixe 13 d'accès à l'aérogare fait communiquer une salle de l'aérogare AG avec le tronçon central 12. A son extrémité opposée, le tronçon central télescopique 12 porte un tronçon 16 d'accès à l'aéronef, généralement articulé sur le tronçon central 12 autour d'un axe vertical.

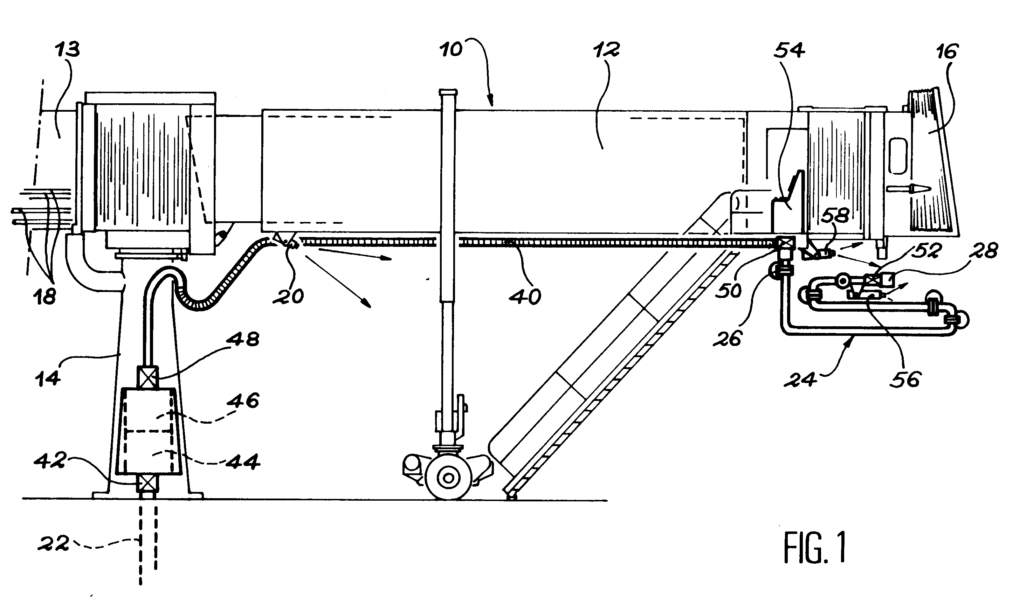

Le pilotage de la passerelle télescopique 10 est assuré par un opérateur placé dans le tronçon 16 d'accès à l'aéronef. Cet opérateur dispose à cet effet d'un poste de commande (non représenté). Les énergies électriques, hydrauliques, pneumatiques, etc. permettant de commander les manoeuvres de la passerelle télescopique 10 depuis ce poste de pilotage proviennent de sources extérieures, généralement situées dans l'aérogare, et elles sont acheminées à l'intérieur de la passerelle par des câbles et des tuyauteries illustrés schématiquement en 18 sur la figure 1. Le poste de pilotage de la passerelle télescopique 10 dispose habituellement d'un ou plusieurs écrans vidéo sur lesquels sont acheminées les images fournies par une ou plusieurs caméras vidéo telles que la caméra 20 sur la figure 1.

Conformément à l'invention, la passerelle télescopique 10 est utilisée pour assurer le supportage et l'alimentation en énergie d'une installation d'avitaillement en carburant d'un aéronef. Cette installation est raccordée sur une prise de pression 22 d'un réseau de distribution de carburant sous pression équipant l'aéroport concerné. La prise de pression 22 est située à proximité immédiate du pilier 14 ou directement dans le bas de celui-ci, comme l'illustre la figure 1.

L'installation d'avitaillement selon l'invention comprend un mécanisme prolongateur 24, motorisé et rétractable, dont une extrémité est fixée à la passerelle télescopique 10, à proximité de l'extrémité de cette passerelle prévue pour être accostée sur l'aéronef.

Dans la forme de réalisation illustrée sur les figures, le mécanisme prolongateur 24 est fixé sous le plancher du tronçon central 12, à l'extrémité de ce tronçon qui porte le tronçon 16 d'accès à l'aéronef. De plus, le mécanisme prolongateur 24 se présente sous la forme d'un bras tubulaire motorisé dont une extrémité est fixée sous le plancher du tronçon central 12 par un joint tournant 26 et dont l'extrémité libre porte un raccord 28 apte à être raccordé de façon étanche sur un orifice de remplissage en carburant de l'aéronef.

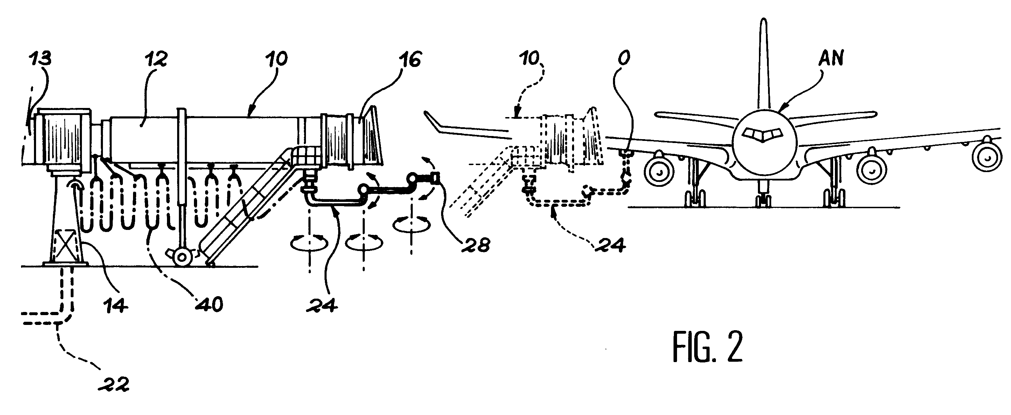

La structure du bras tubulaire motorisé 24 est telle que ce bras peut occuper une position rétractée (figure 1) dans laquelle il est totalement escamoté en dessous de la passerelle télescopique 10 et une position déployée (figures 2 et 3) dans laquelle ce bras fait saillie au-delà de l'extrémité de la passerelle, de telle sorte que le raccord 28 puisse se trouver en face de l'orifice O de remplissage en carburant de l'aéronef lorsque la passerelle 10 est au moins partiellement déployée et lorsqu'un aéronef stationne sur l'emplacement correspondant.

La structure du bras tubulaire motorisé 24 peut prendre toutes les configurations lui permettant d'atteindre les deux positions extrêmes citées précédemment. A titre d'exemple, dans la configuration du bras tubulaire motorisé illustré sur les figures, ce bras est formé de trois segments tubulaires consécutifs, articulés entre eux par des joints tournants. Les mouvements de rotation autorisés par les joints tournants sont choisis afin de définir autant de degrés de liberté que nécessaire pour que le raccord 28 puisse être positionné et orienté de façon satisfaisante par rapport à l'orifice O de remplissage en carburant d'un aéronef AN de type quelconque. Si nécessaire, un ou plusieurs des tronçons tubulaires formant le bras tubulaire motorisé 24 peuvent être télescopiques.

Chacun des mouvements de rotation et de translation dont dispose le bras tubulaire 24 est commandé par un moteur. Lorsque le mécanisme prolongateur est constitué par un bras tubulaire motorisé 24 comme l'illustrent les figures, ce bras tubulaire motorisé forme un tronçon d'un tuyau déformable dont un deuxième tronçon, illustré en 40 sur les figures, raccorde en permanence la prise de pression 22 au joint 26. Ce deuxième tronçon 40 chemine le long de la passerelle télescopique 10, par exemple en dessous du plancher du tronçon central 12, ainsi que le long du pilier 14 ou à l'intérieur de celui-ci.

Le circuit suivi par le carburant entre la prise de pression 22 et le raccord 28 incorpore un certain nombre de moyens de contrôle du carburant injecté dans l'aéronef, comme les unités d'avitaillement existantes. On trouve ainsi (figure 1), à la sortie de la prise de pression 22, une première vanne de sectionnement 42, en aval de laquelle sont placés des moyens de comptage 44 et des moyens de filtrage 46. Une deuxième vanne de sectionnement 48 est montée de préférence à la sortie des moyens de filtrage 46. Une troisième vanne de sectionnement 50 est placée en amont du joint tournant 26 et une quatrième vanne de sectionnement 52 est associée au raccord d'extrémité 28.

Conformément à l'invention, l'installation d'avitaillement est commandée grâce à l'énergie disponible sur la passerelle télescopique 10. Plus précisément, les différents moteurs équipant le bras tubulaire motorisé 24, les vannes de sectionnement 42, 48, 50 et 52 ainsi que les moyens de comptage 44 sont alimentés en énergie à partir de l'énergie (électrique, hydraulique, pneumatique, etc.)acheminée sur la passerelle télescopique 10 par les câbles et tuyauteries 18. Par conséquent, l'installation d'avitaillement conforme à l'invention est mise en oeuvre sans qu'aucun moteur n'ait à être maintenu en fonctionnement pendant le remplissage des réservoirs de l'aéronef. De ce fait, les conditions de sécurité sont sensiblement améliorées par rapport aux installations d'avitaillement existantes.

Pour commander l'installation d'avitaillement, l'opérateur dispose avantageusement d'un pupitre de commande 54 (figure 1)installé dans une partie de la passerelle 10 prévue pour être accostée sur l'aéronef. Le pupitre de commande 54 peut notamment être installé dans l'extrémité du tronçon central 12 sur laquelle est articulé le tronçon 16 d'accès à l'aéronef.

La mise en oeuvre de l'installation d'avitaillement et notamment les opérations de déploiement du bras tubulaire motorisé 24 et de raccordement du raccord 28 sur l'orifice de remplissage en carburant de l'aéronef peuvent être soit entièrement automatisées, soit télécommandées depuis le pupitre de commande 54.

Dans le cas où la mise en oeuvre de l'installation d'avitaillement est entièrement automatisée, elle est gérée par un automate programmable (non représenté). Pour tenir compte du fait que les orifices de remplissage en carburant ne se trouvent pas au même emplacement sur tous les aéronefs, le déploiement du bras tubulaire motorisé est alors effectué, de préférence, en tenant compte des informations stockées sur un badge, d'identification de l'aéronef, par exemple de type hyperfréquence. Sur ce badge sont alors stockées des informations relatives à l'aéronef concerné telles que son type, sa compagnie, son immatriculation, et les coordonnées de l'orifice de remplissage en carburant.

Etant donné que la position de l'extrémité de la passerelle télescopique ainsi que la position et l'orientation de l'aéronef sur son emplacement de stationnement peuvent être connues avec une bonne précision, les informations stockées sur le badge peuvent être exploitées par un récepteur placé sur la passerelle télescopique 10, pour commander un déploiement du bras tubulaire motorisé 24 permettant au raccord 28 d'arriver à proximité de l'orifice de remplissage en carburant de l'aéronef. L'approche finale et le raccordement étanche peuvent être assurés en dotant de proximètres l'extrémité du bras tubulaire motorisé, selon des techniques utilisées couramment en robotique.

Lorsque le badge d'identification de l'aéronef est un badge de type hyperfréquence, la transmission des informations entre le badge et le récepteur s'effectue à distance. Un résultat analogue peut toutefois être obtenu en utilisant un badge de type différent tel qu'un badge magnétique, qui doit alors être introduit par l'opérateur dans un lecteur prévu à cet effet. Ce lecteur peut alors notamment être implanté sur le pupitre de commande 54.

Lorsque la mise en oeuvre de l'installation d'avitaillement selon l'invention est télécommandée à partir du pupitre de commande 54, l'opérateur commande le déploiement du bras tubulaire motorisé 24 à partir des informations qui lui sont fournies par un ou plusieurs récepteurs vidéo présents sur le pupitre de commande 54. Ces récepteurs vidéo reçoivent alors des images qui leurs sont transmises par une ou plusieurs caméras vidéo dont l'une, 56 (figure 1) est implantée sur l'extrémité du bras tubulaire motorisé 24. Une autre caméra vidéo 58 peut notamment être montée à l'extrémité du tronçon central 12 de la passerelle, la plus proche de l'aéronef AN.

Lorsque le déploiement et l'accostage du bras tubulaire motorisé 24 sont télécommandés depuis le pupitre de commande 54, l'accostage du raccord 28 sur l'orifice de remplissage en carburant de l'aéronef et le verrouillage étanche du raccordement peuvent être réalisés de manière automatisée comme précédemment, ou télécommandée par l'opérateur. De même, la mise en oeuvre ultérieure des différentes vannes et des moyens de comptage 44 peut être gérée par un logiciel ou commandée manuellement.

Comme l'illustrent les différentes figures, le tronçon 40 de tuyau déformable qui chemine le long du tronçon central 12 de la passerelle télescopique 10 peut être constitué soit par un tuyau souple supporté à intervalles réguliers par des chariots montés sur un rail placé axialement sous le plancher du tronçon central 12 (figure 2), soit formé de segments rigides articulés entre eux à leurs extrémités (figure 3). Dans ce dernier cas, les tronçons rigides sont placés horizontalement sous le plancher du tronçon central 12 de la passerelle télescopique 10 et chacun d'entre eux est supporté par un chariot qui coulisse sur un rail s'étendant axialement sous le plancher de ce tronçon.

Sur la partie droite de la figure 2, on a représenté en traits discontinus le cas où l'avitaillement s'effectue dans une position de la passerelle télescopique 10 ne permettant pas le transfert des passagers. Comme on l'a illustré en trait plein sur la figure 3, l'avitaillement peut aussi être effectué alors que la passerelle est accostée sur l'aéronef et permet le transfert des passagers.

Enfin, lorsqu'on utilise un badge d'identification de l'aéronef, les informations contenues dans ce badge peuvent être transmises, en même temps que des données de comptage relatives au carburant délivré (qualité, volume, etc.) à un centre de traitement de ces données et de ces informations, qui établit alors instantanément la facture et l'adresse à la compagnie à laquelle appartient l'aéronef. A cet effet, le pupitre de commande 54 incorpore avantageusement des moyens d'acquisition des données de comptage ainsi que des moyens permettant de transmettre ces données ainsi que les informations stockées sur le badge au centre de traitement.

Bien entendu, l'installation d'avitaillement qui vient d'être décrite peut subir de nombreuses modifications, sans sortir du cadre de l'invention. Ainsi, le mécanisme prolongateur 24 peut être constitué par un bras articulé et/ou télescopique dont l'extrémité porte un raccord 28 monté directement à l'extrémité d'un tuyau déformable analogue au tronçon 40, et alors réalisé d'un seul tenant. En outre, si le porte à faux du mécanisme prolongateur dans son état déployé est trop important, la mise en place d'un support reposant sur le sol peut être envisagée. Enfin, on comprend qu'une même passerelle télescopique peut supporter plusieurs mécanismes prolongateurs et plusieurs tuyaux déformables, de façon à pouvoir avitailler simultanément plusieurs aéronefs ou plusieurs réservoirs d'un même aéronef.

## Revendications

1. Passerelle télescopique (10) d'accès à un aéronef (AN) muni d'au moins un orifice (O) de remplissage en carburant, la passerelle comportant une installation d'avitaillement de l'aéronef, à partir d'un réseau de distribution de carburant sous pression comprenant au moins une prise de pression (22) située à proximité d'un emplacement de stationnement de l'aéronef et de la passerelle, ladite passerelle étant munie de moyens (18) d'amenée d'énergie et caractérisée par le fait que l'installation d'avitaillement comporte :
- au moins un mécanisme prolongateur (24), motorisé et rétractable, monté à l'extrémité de la passerelle télescopique (10) et terminé par un raccord (28) apte à être raccordé sur l'orifice de remplissage (O) ;
- au moins un tuyau déformable (24,40) cheminant le long de la passerelle télescopique (10) et du mécanisme prolongateur (24), entre la prise de pression et le raccord (28) ; et
- des moyens de contrôle (42,44,46,48,50,52) du carburant injecté par le-tuyau déformable (24,40);
et par le fait que cette installation est commandée à partir des moyens (18) d'amenée d'énergie qui équipent la passerelle télescopique (10).

2. Passerelle selon la revendication 1, caractérisée par le fait que le mécanisme prolongateur (24) est commandé à distance à partir d'un pupitre de commande (54) situé dans la passerelle télescopique (10).

3. Passerelle selon la revendication 2, caractérisée par le fait que l'installation d'avitaillement comporte au moins une caméra vidéo (56) placée à l'extrémité du mécanisme prolongateur (24), et un moniteur vidéo situé sur le pupitre de commande (54).

4. Passerelle selon la revendication 1, caractérisée par le fait que le mécanisme prolongateur (24) est un mécanisme robotisé, entièrement automatique.

5. Passerelle selon l'une quelconque des revendications 2 à 4, caractérisée par le fait que l'extrémité du mécanisme prolongateur (24) est munie de détecteurs de proximité.

6. Passerelle selon l'une quelconque des revendications précédentes, caractérisée par le fait que l'installation d'avitaillement comprend un badge d'identification de l'aéronef, sur lequel sont stockées des informations relatives à l'aéronef, et un récepteur placé sur la passerelle télescopique (10) et apte à recevoir les informations stockées sur le badge.

7. Passerelle selon les revendications 4 et 6 combinées, caractérisée par le fait que les informations stockées sur le badge incluent les coordonnées de l'orifice (O) de remplissage en carburant.

8. Passerelle selon l'une quelconque des revendications 6 et 7, caractérisée par le fait que le pupitre de commande (54) comporte des moyens d'acquisition de données de comptage relatives en carburant délivré et des moyens de transmission, à un centre de traitement, des données de comptage et des informations stockées sur le badge.

9. Passerelle selon l'une quelconque des revendications précédentes, caractérisée par le fait que le mécanisme prolongateur est un bras tubulaire motorisé (24) formant un tronçon du tuyau déformable.

10. Passerelle selon la revendication 9, caractérisée par le fait que le bras tubulaire motorisé (24) comprend plusieurs segments articulés entre eux, et des premiers moteurs aptes à commander des pivotements relatifs entre les segments.

11. Passerelle selon la revendication 10, caractérisée par le fait que l'un au moins des segments est télescopique et comporte un deuxième moteur apte à commander un allongement de ce segment.

12. Passerelle selon l'une quelconque des revendications précédentes, caractérisé par le fait que le tuyau flexible comprend un tronçon (40) associé à la passerelle télescopique (10) et formé de segments articulés.

13. Passerelle selon l'une quelconque des revendications 1 à 11, caractérisée par le fait que le tuyau flexible comprend un troncon (40) associé à la passerelle télescopique (10) et formé d'un tuyau souple.

14. Passerelle selon l'une quelconque des revendications précédentes, caractérisée par le fait que les moyens de contrôle comprennent des moyens de filtrage du carburant (46), des moyens de comptage (44) de la quantité de carburant délivrée, et des moyens formant vannes (42,48,50,52).

## Claims

1. Telescopic loading bridge (10) for an aircraft (AN) having at least one port (O) for filling fuel, the loading bridge having an installation for refuelling the aircraft from a pressurized fuel distribution network, incorporating at least one pressure intake (22) located in the vicinity of an aircraft parking point, and the loading bridge being equipped with energy supply means (18) and characterized in that the refuelling installation comprises:
- at least one motorized, retractable, extension mechanism (24), mounted on the end of the telescopic loading bridge (10) and terminated by a coupling (28) which can be connected to the filling port (O),
- at least one deformable hose (24, 40) travelling along the loading bridge (10) and the extension mechanism (24) between the pressure intake and the coupling (28),
- means (42, 44, 46, 48, 50, 52) for checking the fuel injected by the deformable hose (24, 40) and that said installation is controlled from the energy supply means (18) equipping the telescopic loading bridge (10).

2. Loading bridge according to claim 1, characterized in that the extension mechanism (24) is remotely controlled from a control console (54) located in the loading bridge (10).

3. Loading bridge according to claim 2, characterized by the refuelling installation having at least one video camera (56) placed at the end of the extension mechanism (24) and a video monitor located on the control console (54).

4. Loading bridge according to claim 1, characterized in that the extension mechanism (24) is an entirely automatic, robotized mechanism.

5. Loading bridge according to any one of the claims 2 to 4, characterized in that the end of the extension mechanism (24) is provided with proximity detectors.

6. Loading bridge according to any one of the preceding claims, characterized in that the refuelling installation has an aircraft identification badge, on which are stored information relative to the aircraft, and a receiver placed on the loading bridge (10) and able to receive the informations stored on the badge.

7. Loading bridge according to claims 4 and 6 combined, characterized in that the information stored on the badge includes the coordinates of the fuel filling port (O).

8. Loading bridge according to either of the claims 6 and 7, characterized in that the control console (54) has means for the acquisition of counting data relative to the fuel supplied and means for transmitting, to a processing centre, counting data and information stored on the badge.

9. Loading bridge according to any one of the preceding claims, characterized in that the extension mechanism is a motorized, tubular arm (24) forming a deformable hose section.

10. Loading bridge according to claim 9, characterized in that the motorized, tubular arm (24) has several segments articulated to one another and first motors able to control the relative pivoting between the segments.

11. Loading bridge according to claim 10, characterized in that at least one of the segments is telescopic and has a second motor able to control an elongation of said segment.

12. Loading bridge according to any one of the preceding claims, characterized in that the hose has a section (40) associated with the loading bridge (10) and formed from articulated segments.

13. Loading bridge according to any one of the claims 1 to 12, characterized in that the hose has a section (40) associated with the loading bridge (10) and formed by a flexible hose.

14. Loading bridge according to any one of the preceding claims, characterized in that the checking means comprise fuel filtering means (46), supplied fuel quantity counting means (44) and means forming valves (42, 48, 50, 52).

## Patentansprüche

1. Teleskop-Zugangsbrücke (10) zu einem mit wenigstens einer Brennstoffversorgungsöffnung (O) versehenen Flugzeug (AN), wobei die Zugangsbrücke eine Anlage umfaßt, um das Flugzeugs aus einem Brennstoffverteilungs-Drucknetz mit Brennstoff zu versorgen, das wenigstens einen Druckanschluß (22) hat, der sich in der Nähe eines Halteplatzes bzw. Stationierungsplatzes des Flugzeugs und der Zugangsbrücke befindet, wobei diese Zugangsbrücke mit Energiezuführungseinrichtungen (18) ausgestattet ist und
**dadurch gekennzeichnet** ist, daß die Versorgungsanlage umfaßt:
- wenigstens eine Verlängerungsvorrichtung (24), motorisiert und zurückziehbar, an die Außenseite der Teleskopzugangsbrücke (10) montiert und mit einem Verbindungsstück (28) endend, das an die Einfüllöffnung (O) angeschlossen werden kann;
- wenigstens eine verformbare Röhre (24,40), längs der Teleskop-Zugangsbrücke (10) und der Verlängerungsvorrichtung (24) verlaufend, zwischen dem Druckanschluß und dem Verbindungsstück (28); und
- Kontrolleinrichtungen (42,44,46,48,50,52) des durch die verformbare Röhre (24,40) eingepreßten Brennstoffs;
und dadurch, daß diese Anlage über Energiezuführungseinrichtungen (18) gesteuert wird, mit denen die Teleskop-Zugangsbrücke (10) ausgerüstet ist.

2. Zugangsbrücke nach Anspruch 1, dadurch gekennzeichnet, daß die Verlängerungsvorrichtung (24) von einem Steuerpult (54) aus ferngesteuert wird, das sich in der Teleskop-Zugangsbrücke (10) befindet.

3. Zugangsbrücke nach Anspruch 2, dadurch gekennzeichnet, daß die Versorgungsanlage wenigstens eine Videokamera (56) umfaßt, die sich am Ende der Verlängerungsvorrichtung (24) befindet, und einen Videomonitor, der sich auf dem Steuerpult (54) befindet.

4. Zugangsbrücke nach Anspruch 1, dadurch gekennzeichnet, daß die Verlängerungsvorrichtung (24) ein robotisierter, vollständig automatischer Mechanismus ist.

5. Zugangsbrücke nach einem der Ansprüche 2 bis 4, dadurch gekennzeichnet, daß das Ende der Verlängerungsvorrichtung (24) mit einem Abstandsmelder bzw. Näherungssensor ausgestattet ist.

6. Zugangsbrücke nach einem der vorangehenden Ansprüche, dadurch gekennzeichnet, daß die Versorgungsanlage ein Identifizierungs-Badge des Flugzeugs enthält, in dem das Flugzeug betreffende Informationen gespeichert sind, und einen Empfänger, der sich an der Teleskop-Zugangsbrücke (10) befindet und die in dem Badge gespeicherten Informationen empfangen kann.

7. Zugangsbrücke nach den Ansprüchen 4 und 6 kombiniert, dadurch gekennzeichnet, daS die in dem Badge gespeicherten Informationen die Koordinaten der Brennstoff-Einfüllöffnung (O) einschließen.

8. Zugangsbrücke nach einem der Ansprüche 6 und 7, dadurch gekennzeichnet, daß das Steuerpult (54) Erfassungseinrichtungen der die gelieferte Brennstoffmenge betreffenden Zählungsdaten und Übertragungseinrichtungen der Zählungsdaten und der in dem Badge gespeicherten Informationen zu einem Verarbeitungszentrum umfaßt.

9. Zugangsbrücke nach einem der vorangehenden Ansprüche, dadurch gekennzeichnet, daß die Verlängerungsvorrichtung ein motorisierte rohrförmiger Arm (24) ist, ein Teilstück der verformbaren Röhre bildend.

10. Zugangsbrücke nach Anspruch 9, dadurch gekennzeichnet, daß der motorisierte rohrförmige Arm (24) mehrere gelenkig miteinander verbundene Segmente umfaßt und erste Motoren, die die relativen Schwenkungen zwischen den Segmenten steuern können.

11. Zugangsbrücke nach Anspruch 10, dadurch gekennzeichnet, daß wenigstens eines der Segmente teleskopisch ist und einen zweiten Motor umfaßt, der eine Verlängerung bzw. Streckung dieses Segments steuern kann.

12. Zugangsbrücke nach einem der vorangehenden Ansprüche, dadurch gekennzeichnet, daß die flexible Röhre ein Teilstück (40) umfaßt, das der Teleskop-Zugangsbrücke (10) zugeordnet ist und gebildet wird durch gelenkige Segmente.

13. Zugangsbrücke nach einem der Ansprüche 1 bis 11, dadurch gekennzeichnet, daß die flexible Röhre ein Teilstück (40) umfaßt, das der Teleskop-Zugangsbrücke (10) zugeordnet ist und gebildet wird durch einen biegsamen Schlauch.

14. Zugangsbrücke nach einem der vorangehenden Ansprüche, dadurch gekennzeichnet, daß die Kontrolleinrichtungen Brennstoff-Filtriereinrichtungen (46), Zähleinrichtungen (44) der gelieferten Brennstoffmenge und Einrichtungen (42,48,50,52) umfassen, die Ventile bilden.
